# EUROPEAN PATENT SPECIFICATION

(11) **EP 4 327 966 B1**
(45) Date of publication and mention of the grant of the patent: **17.06.2026**
(21) Application number: 22791548.5
(22) Date of filing: 30.03.2022
(51) Int. Cl.: B23B 35/00, C10N 40/22, B23Q 11/10, C10M 107/02, C10M 107/44

(54) **MATERIAL FOR ASSISTING METAL MACHINING PROCESS AND MACHINING METHOD**
MATERIAL ZUR UNTERSTÜTZUNG VON METALLBEARBEITUNGSVERFAHREN UND BEARBEITUNGSVERFAHREN
MATERIAU POUR ASSISTER UN PROCÉDÉ D'USINAGE DE MÉTAL ET METHODE D'USINAGE

(30) Priority: 19.04.2021 JP 2021070463
(43) Date of publication of application: 28.02.2024
(73) Proprietor: MITSUBISHI GAS CHEMICAL COMPANY, INC., Chiyoda-ku Tokyo 100-8324 (JP)
(72) Inventor: NONAKA, Hiroyuki, Tokyo 125-8601 (JP); YAGINUMA, Michio, Tokyo 125-8601 (JP); YOKOSUKA, Ryota, Tokyo 125-8601 (JP)
(74) Representative: Hoffmann Eitle
(86) International application number: PCT/JP2022/016086
(87) International publication number: WO 2022/224773

(56) References cited:
- EP-A1- 3 633 014
- WO-A1-2017/022822
- WO-A1-2018/198965
- WO-A1-2018/216756
- JP-A- 2003 225 814
- JP-A- H0 224 012
- MEISEI CHEMICAL WORKS: "Technology for the Future", 2 August 2008 (2008-08-02), pages 1 - 4, XP093207191, Retrieved from the Internet <URL:chrome-extension://efaidnbmnnnibpcajpcglclefindmkaj/https://5.imimg.com/data5/NX/CK/RT/SELLER-421060/poly-ethylene-oxide.pdf> [retrieved on 20240920]
- SPECIALITY OLEO & ET AL: "COMPREHENSIVE CATALOGUE", 28 August 2015 (2015-08-28), XP093203912, Retrieved from the Internet <URL:https://www.nofamerica.com/store/images/companies/1/Catalog-Speciality%20Chemical_NOF_America.pdf> [retrieved on 20240920]

## Description

### Technical Field

The present invention relates to a machining method using a material for assisting metal machining process.

### Background Art

In recent years, along with the demand for tightening of environmental regulations, such as reduction in CO₂ emissions and improvement in fuel efficiency, the use of a light and high-strength difficult-to-machine material such as a metal or an alloy such as a titanium alloy, a fiber reinforced plastic (FRP), or a ceramic has been increasing. Such a difficult-to-machine material requires high quality drilling processing using a machining tool such as a drill in order to bond with a dissimilar member.

When drilling processing such a titanium alloy or the like by using a drill, frictional heat is generated between the rotating drill and the metal, locally increasing the temperature around a processed hole. In addition, the thermal conductivity of a titanium alloy or the like is lower than that of a general metal, and thus machining heat easily concentrates on the metal and the tool. Because of this, the machining tool is remarkably worn during machining processing by the high material strength of the work material and the machining heat. When the heat conductivity is low and heat release is insufficient, the temperature around a processed hole rises and the metal softens, and thus a burr easily occurs at the exit part of the processed hole through which the drill penetrates. Such a burr occurring at the exit part is referred to as a "back burr."

Several techniques have already been proposed for drilling processing of such a metal. For example, JP 2006-150557 A provides a method for processing a titanium alloy by spraying a machining oil and water, as an example.

Meisei Chemical Works, Ltd.: "Technology for the Future", August 2, 2008, pages 1 to 4, refers to different grades of ALKOX^{®} resins which are high molecular weight poly(ethylene oxide).

NOF Corporation, Oleo & Speciality Chemicals Div.: "COMPREHENHSIVE CATALOGUE", August 28, 2015 mentions nonionic surfactants of ester type.

EP 3 633 014 A1 refers to a lubricant material for assisting machining process comprising a polyethylene oxide-polypropylene oxide co-polymer.

### Summary of Invention

### Technical Problem

Conventionally, wet processing using a machining oil or the like is known in order to prevent heat accumulation in the processing location and the drill as in JP 2006-150557 A, and in the case of wet processing, a step of thoroughly washing off the machining oil or the like at the end of machining processing is necessary. Further, when the oil remains around or inside the processed hole, there is a possibility that a screw that is a fastener used when fastening a through hole will deteriorate or loosen at the fastening part, and such a defect may lead to a fatal accident.

The present invention has been made in view of the above problems, and an object thereof is to provide a machining method using a material for assisting metal machining process that can suppress a back burr or fracture of a tool cutting edge that occurs during machining processing of a metal material .

### Solution to Problem

The present inventors have carried out intensive studies in order to solve the above problems. As a result, the present inventors have found that the above problems can be solved by using a machining method as recited in claim 1. Advantageous embodiments of the present invention are recited in the dependent claims.

### Advantageous Effect of Invention

According to the present invention, it is possible to provide a machining method using a material for assisting metal machining process that can suppress a back burr or fracture of a tool cutting edge that occurs during machining processing of a metal material .

### Brief Description of Drawings

[Figure 1] Figure 1 shows a schematic diagram showing one aspect of the machining method of the present invention.
[Figure 2] Figure 2 shows a photograph showing the fractured state of a cutting edge (flank) in a machining processing test in an Example.
[Figure 3] Figure 3 shows a chart showing changes in the back burr height measured up to 150 holes in an Example.
[Figure 4] Figure 4 shows a chart showing the relationship between the height of a back burr and a number of processing hole in an Example.
[Figure 5] Figure 5 shows a chart showing the relationship between the melt viscosity and the number of holes until tool fracture.

### Description of Embodiment

Hereinafter, an embodiment of the present invention will be described in detail, but the scope of the present invention is defined by the appended claims.

### 1. Material for assisting metal machining process

The material for assisting metal machining process of the present invention (hereinafter referred to as the "processing auxiliary material") includes a polymer compound having a melting point of 40°C or more and a temperature at 5% weight loss of 275°C or more, wherein the content of the polymer compound is 80% to by mass based on the total amount of the processing auxiliary material.

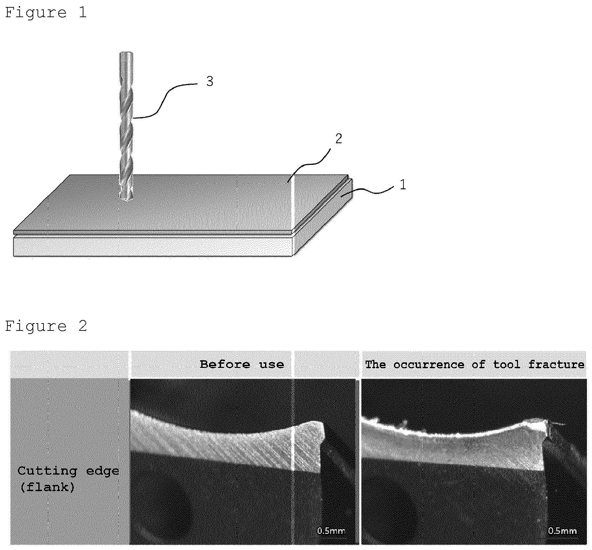

A schematic diagram showing one aspect of the processing auxiliary material of the present invention is shown in Figure 1. As shown in Figure 1, a processing auxiliary material 2 of the present invention is used in machining processing (for example, drilling processing) of a workpiece material 1, particularly a difficult-to-machine material. Specifically, the processing auxiliary material 2 is disposed on a surface of the workpiece material 1, and the workpiece material 1 is processed from the processing auxiliary material 2 side by using a machining tool 3.

### 1.1 Physical Properties

As a result of an intensive study by the present inventors, it has been found that the effect of suppressing a back burr or fracture of a tool cutting edge is more improved by using the processing auxiliary material 2 that easily adheres to the blade of the machining tool 3 and is unlikely to be decomposed by machining heat. From this viewpoint, for the processing auxiliary material of the present embodiment, the melting point and the temperature at 5% weight loss are specified.

The melting point, the temperature at 5% weight loss, and the melt viscosity at 150°C of the metal machining auxiliary material refer to those of the processing auxiliary material 2 that exhibits the effect of the present invention, and are distinguished from those of an adhesive layer described later that is provided between the processing auxiliary material 2 and the workpiece material 1. Because of this, when the material for assisting metal machining process includes an adhesive layer, from the viewpoint of distinguishing the processing auxiliary material from the adhesive layer, the above melting point and the like may be referred to as the melting point, the temperature at 5% weight loss, and the melt viscosity at 150°C of the processing auxiliary material part (corresponding to the processing auxiliary material 2 in Figure 1).

The melting point of the material for assisting metal machining process is 40°C or more, preferably 50 to 275°C, more preferably 50 to 200°C, further preferably 50 to 150°C, more further preferably 50 to 100°C, and further more preferably 50 to 75°C. When the melting point of the material for assisting metal machining process is 40°C or more, the auxiliary material does not easily melt at normal temperature, and the handleability thereof is improved. In addition, when the melting point of the material for assisting metal machining process is 275°C or less, the auxiliary material easily adheres to the blade of the machining tool, and thus tends to suppress a back burr. Further, when the melting point of the material for assisting metal machining process is within the above range, fracture of the tool cutting edge tends to be more suppressed during continuous machining processing. The melting point can be measured by simultaneous differential thermal-thermogravimetric measurement.

The temperature at 5% weight loss of the material for assisting metal machining process is 275°C or more, preferably 275 to 450°C, more preferably 300 to 425°C, further preferably 325 to 400°C, and more further preferably 325 to 380°C. When the temperature at 5% weight loss of the material for assisting metal machining process is 275°C or more, the material for assisting metal machining process adhering to the blade of the machining tool is unlikely to be decomposed by machining heat, and thus fracture of the tool cutting edge tends to be more suppressed. In addition, when the temperature at 5% weight loss of the material for assisting metal machining process is 450°C or less, excessive adhesion of the material for assisting metal machining process during machining processing tends to be suppressed, deterioration of the sharpness of the machining tool tends to be prevented, and a back burr tends to be suppressed. Further, when the temperature at 5% weight loss of the material for assisting metal machining process is within the above range, fracture of the tool cutting edge tends to be more suppressed during continuous machining processing. The temperature at 5% weight loss can be measured by simultaneous differential thermal-thermogravimetric measurement.

In addition, in addition to the above, as a result of a study by the present inventors, it has been found that the lower the melt viscosity of the material for assisting metal machining process at a high temperature, the more fracture of the tool cutting edge tends to be suppressed. From this viewpoint, the melt viscosity at 150°C of the material for assisting metal machining process is 1.0 to 1500 Pa•s. The melt viscosity can be measured with a rheometer.

The melting point, the temperature at 5% weight loss, and the melt viscosity at 150°C of the material for assisting metal machining process can be adjusted by the type of the polymer compound used, the physical properties such as melting point, a combination of two or more polymer compounds, the content of the polymer compound, and the like as well as the type and the content of a different component described later.

### 1.2 Component

The processing auxiliary material of the present embodiment may consist of only the polymer compound, or may include a different component such as a resin or a filler, if necessary, in addition to the polymer compound. Hereinafter, each component will be described in detail.

### 1.2.1. Polymer compound

The polymer compound used in the present embodiment has a melting point of 40°C or more from the viewpoint of making the polymer compound easily adhere to the blade of a machining tool, and a temperature at 5% weight loss of 275°C or more from the viewpoint of making the polymer compound unlikely to be decomposed by machining heat. Polymer compounds may be used singly or in combinations of two or more as long as these have melting point and temperature at 5% weight loss within the above ranges.

The melting point of the polymer compound is 40°C or more, more preferably 50 to 275°C, further preferably 50 to 200°C, more further preferably 50 to 150°C, further more preferably 50 to 100°C, and particularly preferably 50 to 75°C. When the melting point of the polymer compound is 40°C or more, the auxiliary material does not easily melt at normal temperature, and the handleability thereof is improved. In addition, when the melting point of the polymer compound is 275°C or less, the polymer compound easily adheres to the blade of the machining tool, and thus tends to suppress a back burr. Further, when the melting point of the polymer compound is within the above range, fracture of the tool cutting edge tends to be more suppressed during continuous machining processing. The melting point can be measured by simultaneous differential thermal-thermogravimetric measurement.

The temperature at 5% weight loss of the polymer compound is 275°C or more, more preferably 275 to 450°C, further preferably 300 to 425°C, more further preferably 325 to 400°C, and further more preferably 325 to 380°C. When the temperature at 5% weight loss of the polymer compound is 275°C or more, the polymer compound adhering to the blade of the machining tool is unlikely to be decomposed by machining heat, and thus fracture of the tool cutting edge tends to be more suppressed during continuous machining processing. In addition, when the temperature at 5% weight loss of the polymer compound is 450°C or less, excessive adhesion of the polymer compound during machining processing tends to be suppressed, deterioration of the sharpness of the machining tool tends to be prevented, and a back burr tends to be suppressed. Further, when the temperature at 5% weight loss of the polymer compound is within the above range, fracture of the tool cutting edge tends to be more suppressed during continuous machining processing. The temperature at 5% weight loss can be measured by simultaneous differential thermal-thermogravimetric measurement.

In addition, in addition to the above, as a result of a study by the present inventors, it has been found that the lower the melt viscosity of the polymer compound at a high temperature, the more fracture of the tool cutting edge tends to be suppressed. From this viewpoint, the melt viscosity at 150°C of the polymer compound is 1.0 to 1500 Pa•s.

The polymer compound is not particularly limited, and examples thereof include one having a polyolefin oxide skeleton, a polyurethane skeleton, a polyolefin skeleton, or a polyester skeleton. A polymer compound having at least one of a polyolefin oxide skeleton, a polyurethane skeleton, a polyolefin skeleton, or a polyester skeleton is hereinafter also referred to as a "polymer compound A." Among these, one having a polyolefin oxide skeleton, a polyurethane skeleton, or a polyolefin skeleton are preferable, and one having a polyolefin oxide skeleton is more preferable. By using such a polymer compound, the melting point and the temperature at 5% weight loss can be easily adjusted within the above ranges, and also the occurrence of a back burr and fracture of the tool cutting edge tend to be more suppressed.

The polymer compound A having a polyolefin oxide skeleton is not particularly limited, and examples thereof include a polyolefin oxide such as polyethylene oxide, polypropylene oxide, or a copolymer of ethylene oxide and propylene oxide; a polyolefin oxide monoester such as polyoxyethylene monostearate, a polyolefin oxide diester such as polyoxyethylene distearate, a polyolefin oxide monoether such as polyoxyethylene monomethyl ether, and a polyolefin oxide diether such as polyoxyethylene dimethyl ether.

A polymer compound A having a polyurethane skeleton is not particularly limited, and examples thereof include a polyester-based polyurethane resin, a polyether-based polyurethane resin, and a polycarbonate-based polyurethane resin.

A polymer compound A having a polyolefin skeleton is not particularly limited, and examples thereof include polyethylene, polypropylene, an ethylene-vinyl acetate copolymer, and an ethylene-ethyl acrylate copolymer.

A polymer compound A having a polyester skeleton is not particularly limited, and examples thereof include an aromatic polyester resin such as polyethylene terephthalate, polytrimethylene terephthalate, or polybutylene terephthalate; and an aliphatic polyester resin such as polylactic acid, polycaprolactone, and polybutylene succinate.

The weight average molecular weight of the polymer compound A is preferably 1000 or more, and more preferably 1500 or more. In addition, the upper limit of the weight average molecular weight of the polymer compound A is not particularly limited, and is 10000000 or less. The weight average molecular weight of the polymer compound A can be measured by gel permeation chromatography.

The content of the polymer compound A is 80 to 100% by mass, based on the total amount of the processing auxiliary material. When the content of the polymer compound A is 50% by mass or more, the occurrence of a back burr and fracture of the tool cutting edge tend to be more suppressed.

In addition, a polymer compound other than the polymer compound A (hereinafter referred to as a "polymer compound B") is not particularly limited, and examples thereof include an epoxy resin, a phenolic resin, a cyanate resin, a melamine resin, a urea resin, and a thermosetting polyimide. By using such a polymer compound B, the formability of the processing auxiliary material tends to be more improved.

The content of the polymer compound B is more preferably 5 to 20% by mass, based on the total amount of the processing auxiliary material.

When the polymer compound A and the polymer compound B are not distinguished, these are each simply referred to as a "polymer compound."

### 1.2.2. Different component

The processing auxiliary material may include a different component other than those described above, if necessary. The different component is not particularly limited, and examples thereof include a filler, a lubricity improving component, a plasticizer, and a softener.

The total content of the different component is more preferably 5 to 20% by mass, based on the total amount of the processing auxiliary material.

### 1.2.2.1. Filler

The filler is not particularly limited, and examples thereof include an inorganic filler such as graphite, calcium carbonate, talc, silica, molybdenum disulfide, tungsten disulfide, and a molybdenum compound. By using such a resin, the formability of the processing auxiliary material tends to be more improved.

The total content of the filler is more preferably 5 to 20% by mass, based on the total amount of the processing auxiliary material.

### 1.2.2.2. Lubricity improving component

The lubricity improving component is not particularly limited, and examples thereof include an amide-based compound such as ethylenebisstearamide, oleamide, stearamide, or methylenebisstearamide; a fatty acid-based compound such as lauric acid, stearic acid, palmitic acid, or oleic acid; a fatty acid ester-based compound such as butyl stearate, butyl oleate, or glycol laurate; an aliphatic hydrocarbon-based compound such as liquid paraffin, and a higher aliphatic alcohol such as oleyl alcohol.

### 1.2.2.3. Plasticizer and/or softener

The plasticizer and/or the softener are/is not particularly limited, and examples thereof include a phthalic acid ester, an adipic acid ester, a trimellitic acid ester, a polyester, a phosphoric acid ester, a citric acid ester, an epoxidized vegetable oil, and a sebacic acid ester. By including a plasticizer and/or a softener, the flexibility tends to be more improved.

### 1.3. Adhesive layer

The processing auxiliary material may further have an adhesive layer on a surface that comes into contact with a metal material. Thereby, the close contact between the processing auxiliary material and the workpiece material is more improved, and it is possible to suppress the displacement of the processing auxiliary material from the workpiece material during machining processing.

A constituent component of the adhesive layer is not particularly limited, and examples thereof include a thermoplastic resin such as a urethane-based polymer, an acrylic polymer, a vinyl acetate-based polymer, a vinyl chloride-based polymer, a polyester-based polymer, and a copolymer thereof; and a thermosetting resin such as a phenolic resin, an epoxy resin, a melamine resin, a urea resin, an unsaturated polyester resin, an alkyd resin, polyurethane, a thermosetting polyimide, and a cyanate resin.

### 1.4 Shape

The shape of the processing auxiliary material can be appropriately selected according to the shape of the workpiece material and the machining method to be applied. The shape of the processing auxiliary material is not particularly limited, and as an example, can be a sheet, a block having an arbitrary shape, or the like.

### 2. Machining method

The machining method of the present invention includes a machining processing step of machining a metal material with a machining tool to form a machined part having an exit and an entry for the machining tool, and includes a closely contacting step of closely contacting the above processing auxiliary material in advance with a portion of the metal material to be the exit and/or the entry for the machining tool, before the machining processing step.

### 2.1 Closely contacting step

The closely contacting step is a step of closely contacting the processing auxiliary material with a portion of the metal material to be the exit and/or the entry for the machining tool, before the machining processing step. Thereby, in the machining processing step described later, a component of the processing auxiliary material migrates to the blade of the tool, and a back burr and fracture of the tool cutting edge that occur during the machining processing of the metal material are suppressed. Especially, it is preferable to closely contact the processing auxiliary material with the portion to be the entry.

Here, the "portion to be the exit" can also, when the portion is a surface, be rephrased as the surface to be the exit. Correspondingly, the "portion to be the entry" can also be rephrased as the surface to be the entry.

In the drilling processing, the edge periphery of the hole obtained (machined part) corresponds to the "portion to be the entry" and the "portion to be the exit". In grooving processing, the edge periphery of the groove obtained (machined part) corresponds to the "portion to be the entry" for the machining tool. In turning processing, the surface periphery of the workpiece material to be machined corresponds to the "portion to be the entry" for the machining tool. In addition, in the cutting processing, the edge periphery of the cut surface obtained corresponds to the "portion to be the entry" and the "portion to be the exit."

The method for closely contacting a workpiece material and the processing auxiliary material with each other is not particularly limited, and examples thereof include a method involving physically fixing the processing auxiliary material and the workpiece material with a clip or a jig; and a method using the processing auxiliary material including an adhesive layer that comes into contact with the workpiece material.

### 2.2 Machining processing step

In the machining processing step, a workpiece material is machining processed with a machining tool to which a processing auxiliary material adheres, or a closely contacted body of a processing auxiliary material and a workpiece material is machining processed with a machining tool.

### 2.2.1 Metal material

The metal material is not particularly limited, and examples thereof include at least one selected from the group consisting of a titanium alloy, an aluminum alloy, a magnesium alloy, a low alloy steel, a stainless steel, and a heat resistant alloy. By using such a metal material as a workpiece material, the following effect of the present invention can be exhibited more effectively: it is possible to suppress a back burr and fracture of the tool cutting edge that occur during machining processing of the metal material.

Among these, a metal material having low heat conductivity is preferable. The lower the heat conductivity, the more insufficient the heat release during machining processing, the more the temperature around the machined hole rises, the more the metal softens, and the more easily a back burr occurs, and thus the present invention is particularly useful. From this viewpoint, the heat conductivity of the metal material is preferably 100 W/m•k or less, preferably 1 to 50 W/m•k, and preferably 1 to 20 W/m•k.

### 2.2.2 Machining method

Machining processing is not particularly limited as long as it is processing involving machining a workpiece material, and examples thereof include drilling processing, grooving processing, turning processing, and cutting processing. Among these, drilling processing in which a hole is created by using a drill as a machining tool is preferable.

For drilling processing, it is preferable to adjust the machining speed and feed speed according to the heat conductivity and the hardness of the metal material. Thereby, it is possible to proceed with the processing while dissipating heat, and thus the occurrence of a back burr and fracture of the tool cutting edge tends to be more suppressed.

From this viewpoint, the machining speed of the drill is preferably 5 to 80 m/min, more preferably 10 to 70 m/min, and further preferably 15 to 50 m/min. In addition, the feed speed is preferably 0.01 to 1.0 mm/rev, more preferably 0.05 to 0.7 mm/rev, and further preferably 0.10 to 0.5 mm/rev. The faster the machining speed and the feed speed, the higher the processing speed, but the higher the amount of heat generated, the more easily a burr occurs, and the more the burden on the tool is also increased. On the other hand, the slower the machining speed and the feed speed, the lower the processing speed and the lower the productivity.

The material of the drill is preferably a cemented carbide prepared by sintering a hard metal carbide powder. Examples of such a cemented carbide is not particularly limited, and examples thereof include a metal obtained by mixing and sintering tungsten carbide and cobalt as a binder. Titanium carbide, tantalum carbide, or the like is sometimes added to such a cemented carbide in order to further improve a material property according to the purpose of use.

In addition, the shape of the drill can be appropriately selected according to the drilling processing conditions, the type and the shape of the workpiece material, and the like. The shape of the drill is not particularly limited, and examples thereof include the point angle of the drill, the helix angle of the flute, the number of cutting edges, and the like. The surface coating of the drill can be appropriately selected according to the drilling processing conditions, the type and the shape of the workpiece material, and the like. Examples of a preferable type of the surface coating include a diamond coat, a diamond-like coat, and a ceramic coat.

### Examples

Hereinafter, the present invention will be described more specifically by using Examples and Comparative Examples. The present invention is by no means limited by the following Examples.

The specifications of the workpiece material used in each of the Examples and the Comparative Examples, each component used in the production of the processing auxiliary materials, the adhesive layer, the drill bit used for drilling processing, the hole forming instrument, the apparatus used for evaluation, and the like are shown in Table 1.

### 1. Workpiece material

Ti-6Al-4V (titanium alloy, model number: ASTM-F136, thickness: 10 mm)

### 2. Polymer compounds

Ethylene-vinyl acetate copolymer (product name: PR8050C, manufactured by Tokyo Printing Ink Mfg. Co., Ltd.)
Ethylene-vinyl acetate copolymer (product name: PR5015M, manufactured by Tokyo Printing Ink Mfg. Co., Ltd.)
Ethylene ethyl acrylate copolymer (product name: Rexpearl A6200, Japan Polyethylene Corporation)
Polyethylene glycol stearate (product name: NONION S4, manufactured by NOF Corporation)
Polyethylene glycol stearate (product name: NONION S6, manufactured by NOF Corporation)
Polyethylene glycol stearate (product name: NONION S15.4V, manufactured by NOF Corporation)
Polyethylene glycol stearate (product name: NONION S40, manufactured by NOF Corporation)
Polyethylene glycol monomethyl ether (product name: UNIOX M2000, manufactured by NOF Corporation)
Octadecyl stearate (product name: UNISTER M9676, manufactured by NOF Corporation)
Ethylene oxide-propylene oxide copolymer (product name: ALKOX EP1010N, manufactured by Meisei Chemical Works, Ltd.)
Polyethylene oxide (product name: ALKOX R150, manufactured by Meisei Chemical Works, Ltd.)
Polyethylene oxide (product name: ALKOX E300, manufactured by Meisei Chemical Works, Ltd.)
Polyethylene oxide (product name: ALKOX E45, manufactured by Meisei Chemical Works, Ltd.)
Paraffin (product name: Paraffin Wax 135, manufactured by Nippon Seiro Co., Ltd.)
Thermoplastic polyurethane (product name: Miractran P22M, manufactured by Nippon Miractran Company Limited)
Low density polyethylene (manufactured by KENIS, Ltd., thickness: 2 mm)
Polypropylene (thickness: 2 mm)
Polyethylene terephthalate (PET, manufactured by Iwata Mfg. Co., Ltd., thickness: 2 mm)
Polypropylene glycol glyceryl ether (product name: UNIOL TG4000, manufactured by NOF Corporation)

### 3. Filler

Graphite (XD100, manufactured by Ito Graphite Co., Ltd.)
Molybdenum disulfide (NICHIMOLY M-5 Powder, manufactured by Daizo Corporation)

### 4. Adhesive layer

Acrylic double-sided tape (product name: No. 5612, manufactured by Nitto Denko Corporation, base material: polyester film, thickness: 0.12 mm, adhesive surface: acrylic adhesive)

### 5. Drilling processing instrument

Cemented carbide drill (product name: ADO-SUS-5D, manufactured by OSG, diameter: 6.0 mmφ, point angle: 140°, helix angle: 30°, solid drill, WXL coat)

### 6. Evaluation apparatus

Machining center (product name: VCN-535C, manufactured by Yamazaki Mazak Corporation)
3D shape measuring machine (product name: VR-5200, manufactured by KEYENCE Corporation)
Tool dynamometer (product name: 4-component rotating dynamometer 9170A, manufactured by Kistler Japan Co., Ltd.)
Simultaneous differential thermal-thermogravimetric measurement apparatus (product name: STA7200, manufactured by Hitachi High-Tech Science Corporation)
Rheometer (product name: ARES-G2, manufactured by TA Instruments)

### [Example 1]

Polyethylene glycol stearate (NONION S6, manufactured by NOF Corporation) was heated and melted, and then the molten material was poured into a 2 mm thick template to obtain a 2 mm thick sheet. One side of a 0.12 mm thick acrylic double-sided tape (No. 5612, manufactured by Nitto Denko Corporation) serving as an adhesive layer was attached to one side of the sheet in such a way as to be in contact with the material to prepare a processing auxiliary material. By using the obtained processing auxiliary material, the following machining processing test was carried out.

### [Examples 2 to 12]

Each processing auxiliary material was prepared in the same manner as in Example 1 except that the materials shown in Table 1 were used, and the following machining processing test was carried out.

[Examples 13 to 15] One side of a 0.12 mm thick acrylic double-sided tape (No. 5612, manufactured by Nitto Denko Corporation) serving as an adhesive layer was attached to one side of a 2 mm thick low density polyethylene, polypropylene, or polyethylene terephthalate in such a way as to be in contact with the material to prepare each processing auxiliary material. By using the obtained processing auxiliary material, the following machining processing test was carried out.

### [Example 16]

A processing auxiliary material was prepared in the same manner as in Example 1 except that a composition obtained by mixing 60 wt% of polyethylene oxide (ALKOX R150, manufactured by Meisei Chemical Works, Ltd.) and 40 wt% of graphite (XD100, manufactured by Ito Graphite Co., Ltd.) was heated and melted, and then the molten material was poured into a 2 mm thick template to obtain a 2 mm thick sheet. By using the obtained sheet, the following machining processing test was carried out.

### [Example 17]

A processing auxiliary material was prepared in the same manner as in Example 1 except that a composition obtained by mixing 60 wt% of polyethylene oxide (ALKOX R150, manufactured by Meisei Chemical Works, Ltd.) and 40 wt% of polyethylene glycol stearate (product name: NONION S40, manufactured by NOF Corporation) was heated and melted, and then the molten material was poured into a 2 mm thick template to obtain a 2 mm thick sheet. By using the obtained sheet, the following machining processing test was carried out.

### [Example 18]

A processing auxiliary material was prepared in the same manner as in Example 1 except that a composition obtained by mixing 60 wt% of polyethylene oxide (ALKOX R150, manufactured by Meisei Chemical Works, Ltd.) and 40 wt% of molybdenum disulfide (NICHIMOLY M-5 Powder, manufactured by Daizo Corporation) was heated and melted, and then the molten material was poured into a 2 mm thick template to obtain a 2 mm thick sheet. By using the obtained sheet, the following machining processing test was carried out.

### [Example 19]

A processing auxiliary material was prepared in the same manner as in Example 1 except that a composition obtained by mixing 60 wt% of polyethylene oxide (ALKOX R150, manufactured by Meisei Chemical Works, Ltd.), 20 wt% of polyethylene glycol stearate (product name: NONION S4, manufactured by NOF Corporation), and 20 wt% of graphite (XD100, manufactured by Ito Graphite Co., Ltd.) was heated and melted, and then the molten material was poured into a 2 mm thick template to obtain a 2 mm thick sheet. By using the obtained sheet, the following machining processing test was carried out.

### [Example 20]

A processing auxiliary material was prepared in the same manner as in Example 1 except that a composition obtained by mixing 60 wt% of polyethylene oxide (ALKOX R150, manufactured by Meisei Chemical Works, Ltd.), 20 wt% of polypropylene glycol glyceryl ether (product name: UNIOL TG4000, manufactured by NOF Corporation), and 20 wt% of graphite (XD100, manufactured by Ito Graphite Co., Ltd.) was heated and melted, and then the molten material was poured into a 2 mm thick template to obtain a 2 mm thick sheet. By using the obtained sheet, the following machining processing test was carried out.

### [Comparative Examples 1 and 2]

In Comparative Example 1, the following machining test was carried out without using a processing auxiliary material, and in Comparative Example 2, only an acrylic double-sided tape (No. 5612, manufactured by Nitto Denko Corporation) was attached to the workpiece material, and the following machining processing test was carried out.

### [Comparative Examples 3 to 5]

Each processing auxiliary material was prepared in the same manner as in Example 1 except that the materials shown in Table 1 were used. By using the obtained processing auxiliary material, the following machining processing test was carried out.

### [Melting point and temperature at 5% weight loss measurement]

In the materials shown in Table 1, by using a differential thermal-thermogravimetric measurement apparatus (STA7200, manufactured by Hitachi High-Tech Science Corporation), the temperature was raised from 30°C to 500°C by 10°C/min in a nitrogen stream, and the melting point and the temperature at 5% weight loss of the materials were measured.

In addition, in Examples 6 and 10, in addition to simultaneous differential thermal-thermogravimetric measurement (TG-DTA), the temperature was raised from 50°C by 10°C on a hot plate, and the temperature when the material melted was taken as the melting point. The melting point and the temperature at 5% weight loss of each thereof are shown in Table 1.

### [Machining processing test]

The surface of a processing auxiliary material prepared on which an adhesive layer was formed was attached to a portion of the workpiece material (Ti-6Al-4V) to be the entry (entry part) for the machining tool (cemented carbide drill), and then the workpiece material was fixed to the drilling processing instrument by using a jig. Machining processing (drilling processing) with the cemented carbide drill was carried out under conditions of V = 40 m/min and f = 0.12 mm/rev.

### (Evaluation of number of holes until the occurrence of tool fracture)

The machining tool was observed every 10th hole, 20th hole, 50th hole, 100th hole, 150th hole, 300th hole, 450th hole, and 600th hole from the start of the processing, and the machining processing was terminated when tool fracture occurred. More specifically, the blade edge of the drill bit was photographed by using a one-shot 3D shape measuring machine (VR-5200, manufactured by KEYENCE Corporation), and the processing was terminated when fracture of the cutting edge (flank) as shown in Figure 2 was confirmed. The location of the occurrence of tool fracture was measured with a 4-component rotating dynamometer 9170A (manufactured by Kistler Japan), and the location of the occurrence of tool fracture was estimated from the location at which the thrust force remarkably increased. The number of holes until the occurrence of tool fracture for each is shown in Table 1.

### (Evaluation of back burr)

The drill bit exit side of a through hole after processing was measured by using a one-shot 3D shape measuring machine (VR-5200, manufactured by KEYENCE Corporation), and from the measured data, the back burr height around the processed hole on the drill bit exit side was calculated by using analysis software. The measurement was carried out every 10 holes from the 1st hole up to the 150th hole, and every 50 holes after that, and results of the average value of the height of the back burr around the machined part (processed hole) in each region in which no tool fracture occurred are shown in Table 1.

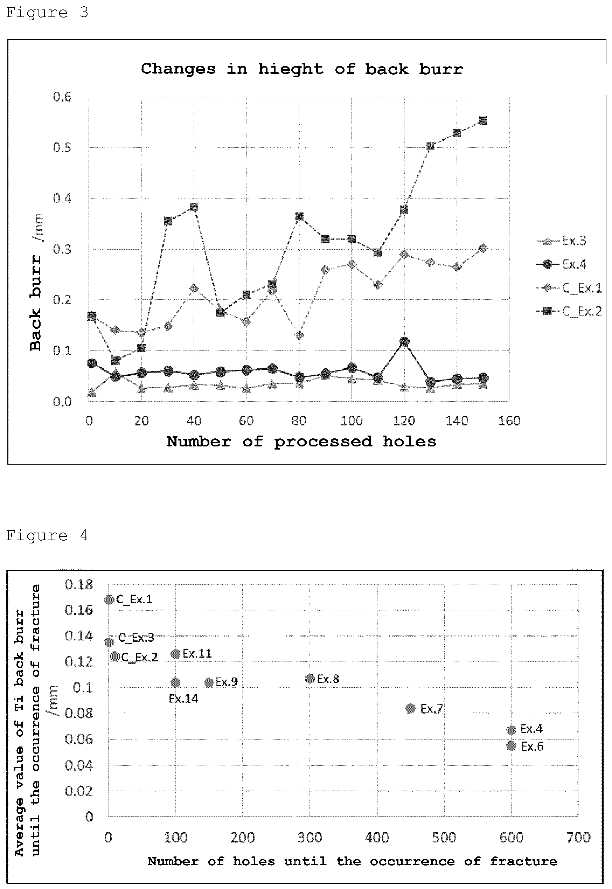

In addition, changes in the back burr height measured up to 150 holes are shown in Figure 3, and the relationship between the back burr height and the processing man-hours for the Examples and the Comparative Examples is shown in Figure 4. In Examples 4 and 6, no tool fracture occurred even when 600 holes were processed, and thus the burr height when 600 holes were processed is shown.

### [Melt viscosity]

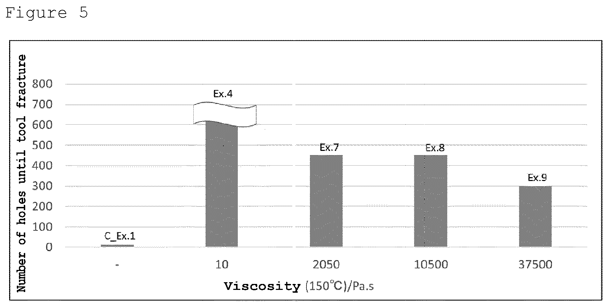

The melt viscosity (Pa•s) at 150°C was measured by using a rheometer (ARES-G2, manufactured by TA Instruments). The relationship between results thereof and the number of holes until tool fracture is shown in Figure 5. In Example 4, the number of holes until tool fracture is about 600 holes, but actually, even when 600 holes were processed, no tool fracture occurred, and the actual number of holes until tool fracture is assumed to be a larger value.

**[Table 1]**

| | Polymer compound | Filler | Physical properties of processing auxiliary material | | Adhesive layer | Evaluation | |
|---|---|---|---|---|---|---|---|
| | | | Melting point [°C] | temperature at 5% weight loss [°C] | | Number of holes until the occurrence of tool fracture | Average value of back burr [mm] |
| Example 1 | NONION S6 | - | 40 | 298 | Yes | >50 | 0.10 |
| Example 2 | NONION S15.4V | - | 51 | 354 | Yes | >100 | 0.08 |
| Example 3 | ALKOX EP1010N | - | 53 | 354 | Yes | >600 | 0.04 |
| Example 4 | NONION S40 | - | 55 | 370 | Yes | >600 | 007 |
| Example 5 | UNIOX M2000 | - | 56 | 357 | Yes | >450 | 0.14 |
| Example 6 | PR8050C | - | 60 | 332 | Yes | >600 | 0.06 |
| Example 7 | ALKOX R150 | - | 68 | 362 | Yes | >300 | 0.09 |
| Example 8 | ALKOX E300 | - | 71 | 358 | Yes | >300 | 0.11 |
| Example 9 | ALKOX E45 | - | 71 | 360 | Yes | >150 | 0.10 |
| Example 10 | PR5015M | - | 80 | 341 | Yes | >300 | 0.10 |
| Example 11 | Rexpearl A6200 | - | 96 | 397 | Yes | >100 | 0.13 |
| Example 12 | Miractran P22MBRNAT | - | 130 | 313 | Yes | >100 | 0.10 |
| Example 13 | Low density polyethylene | - | 111 | 423 | Yes | >50 | 0.10 |
| Example 14 | Polypropylene | - | 164 | 418 | Yes | >50 | 0.13 |
| Example 15 | PET | - | 260 | 393 | Yes | >50 | 0.16 |
| Example 16 | ALKOX R150 | XD100 | 70 | 372 | Yes | >450 | 007 |
| Example 17 | ALKOX R150/NONION S40 | - | 63 | 370 | Yes | >450 | 0.05 |
| Example 18 | ALKOX R150 | MoS2 | 66 | 343 | Yes | >450 | 0.07 |
| Example 19 | ALKOX R150/NONION S4 | XD100 | 66 | 338 | Yes | >100 | 0.14 |
| Example 20 | ALKOX R150/UNIOL TG4000 | XD100 | 69 | 345 | Yes | >100 | 0.13 |
| Comparative Example 1 | - | - | - | - | No | 10 or less | 0.17 |
| Comparative Example 2 | - | - | - | - | Yes | 20 or less | 0.12 |
| Comparative Example 3 | NONION S4 | - | 36 | 265 | Yes | 10 or less | 0.14 |
| Comparative Example 4 | Paraffin Wax 135 | - | 61 | 219 | Yes | 10 or less | 0.10 |
| Comparative Example 5 | UNISTER M9676 | - | 59 | 213 | Yes | 10 or less | 0.09 |

The melting point and the temperature at 5% weight loss in Table 1 mean, for one including no filler and composed of a single polymer compound, the values of the melting point and the temperature at 5% weight loss of the polymer compound, and mean, for one including a filler or including a plurality of polymer compounds, the values of the melting point and the temperature at 5% weight loss of the composition.

### Industrial Applicability

The material for assisting metal machining process of the present invention has industrial applicability as an auxiliary material for machining processing a metal material.

### Reference Signs List

1 ... workpiece material, 2 ... processing auxiliary material, 3 ... machining tool

## Claims

1. A machining method, comprising
a machining processing step of machining a metal material (1) with a machining tool (3) to form a machined part having an exit and an entry for the machining tool (3), and comprising
a closely contacting step of closely contacting a material (2) for assisting metal machining process in advance with a portion of the metal material (1) to be the exit and/or the entry for the machining tool (3), before the machining processing step,
wherein the material (2) for assisting metal machining process comprises a polymer compound,
a content of the polymer compound is 80% to 100% by mass based on the total amount of the material (2) for assisting metal machining process, wherein the polymer compound has at least one of a polyolefin oxide skeleton, a polyurethane skeleton, a polyolefin skeleton, or a polyester skeleton,
a melting point is 40°C or more and a temperature at 5% weight loss is 275°C or more, both being determined as described in the section *Melting point and temperature at 5% weight loss measurement* of the description, and
a melt viscosity at 150°C is 1.0 to 1500 Pa·s, determined as described in the section *Melt viscosity* of the description.

2. The machining method according to claim 1, wherein
the material (2) for assisting metal machining process further comprises an adhesive layer on a surface that comes into contact with a metal material.

3. The machining method according to any one of claims 1 to 2, wherein
the material (2) for assisting metal machining process further comprises a resin and/or a filler.

4. The machining method according to any one of claims 1 to 3, wherein
the metal material (1) comprises at least one selected from the group consisting of a titanium alloy, an aluminum alloy, a magnesium alloy, a low alloy steel, a stainless steel, and a heat resistant alloy.

5. The machining method according to any one of claims 1 to 4, wherein
in the machining processing step, a hole is created by drilling processing by using a drill as the machining tool (3).

6. The machining method according to claim 5 wherein
in the machining processing step, a machining speed of the drill is 5 to 80 m/min, and a feed speed is 0.01 to 1.0 mm/rev.

## Patentansprüche

1. Bearbeitungsverfahren, umfassend
einen Bearbeitungsschritt zum Bearbeiten eines Metallmaterials (1) mit einem Bearbeitungswerkzeug (3), um ein bearbeitetes Teil mit einem Austritt und einem Eintritt für das Bearbeitungswerkzeug (3) zu bilden, und umfassend
einen dichten Kontaktschritt zum dichten Kontaktieren eines Materials (2) zum Unterstützen eines Metallbearbeitungsprozesses vorab mit einem Abschnitt des Metallmaterials (1), der der Austritt und/oder der Eintritt für das Bearbeitungswerkzeug (3) ist, vor dem Bearbeitungsschritt,
wobei das Material (2) zum Unterstützen eines Metallbearbeitungsprozesses eine Polymerverbindung umfasst,
ein Gehalt der Polymerverbindung 80 Massenprozent bis 100 Massenprozent, bezogen auf die Gesamtmenge des Materials (2) zum Unterstützen eines Metallbearbeitungsprozesses, beträgt, wobei die Polymerverbindung mindestens eines von einem Polyolefinoxidgerüst, einem Polyurethangerüst, einem Polyolefingerüst oder einem Polyestergerüst aufweist,
ein Schmelzpunkt 40 °C oder mehr beträgt und eine Temperatur bei 5 % Gewichtsverlust 275 °C oder mehr beträgt, wobei beide wie in dem Abschnitt Messung von Schmelzpunkt und Temperatur bei 5 % Gewichtsverlust der Beschreibung beschrieben, bestimmt werden, und
eine Schmelzviskosität bei 150 °C 1,0 bis 1500 Pa·s beträgt, bestimmt wie in dem Abschnitt Schmelzviskosität der Beschreibung beschrieben.

2. Bearbeitungsverfahren nach Anspruch 1, wobei
das Material (2) zum Unterstützen eines Metallbearbeitungsprozesses weiter eine Klebeschicht auf einer Oberfläche umfasst, die mit einem Metallmaterial in Kontakt kommt.

3. Bearbeitungsverfahren nach einem der Ansprüche 1 bis 2, wobei
das Material (2) zum Unterstützen des Metallbearbeitungsprozesses weiter ein Harz und/oder einen Füllstoff umfasst.

4. Bearbeitungsverfahren nach einem der Ansprüche 1 bis 3, wobei
das Metallmaterial (1) mindestens eines umfasst, ausgewählt aus der Gruppe bestehend aus einer Titanlegierung, einer Aluminiumlegierung, einer Magnesiumlegierung, einem niedriglegierten Stahl, einem Edelstahl und einer hitzebeständigen Legierung.

5. Bearbeitungsverfahren nach einem der Ansprüche 1 bis 4, wobei
im Bearbeitungsschritt durch Bohrbearbeitung eine Bohrung erzeugt wird, indem ein Bohrer als das Bearbeitungswerkzeug (3) verwendet wird.

6. Bearbeitungsverfahren nach Anspruch 5, wobei
im Bearbeitungsschritt eine Bearbeitungsgeschwindigkeit des Bohrers 5 bis 80 m/min beträgt und eine Vorschubgeschwindigkeit 0,01 bis 1,0 mm/U beträgt.

## Revendications

1. Procédé d'usinage, comprenant
une étape de traitement d'usinage consistant à usiner un matériau métallique (1) avec un outil d'usinage (3) pour former une pièce usinée présentant une sortie et une entrée pour l'outil d'usinage (3), et comprenant
une étape de mise en contact étroit consistant à mettre en contact étroit un matériau (2) pour aider un processus d'usinage de métal au préalable avec une partie du matériau métallique (1) devant être la sortie et/ou l'entrée pour l'outil d'usinage (3), avant l'étape de traitement d'usinage,
dans lequel le matériau (2) pour aider un processus d'usinage de métal comprend un composé polymère,
une teneur du composé polymère est de 80 % à 100 % en masse sur la base de la quantité totale du matériau (2) pour aider un processus d'usinage de métal, dans lequel le composé polymère présente au moins un squelette d'oxyde de polyoléfine, un squelette de polyuréthane, un squelette de polyoléfine ou un squelette de polyester,
un point de fusion est de 40 °C ou plus et une température à 5 % de perte de masse est de 275 °C ou plus, ces deux valeurs étant déterminées comme décrit dans la section Point de fusion et température à 5 % de perte de masse de la description, et
une viscosité à l'état fondu à 150 °C est de 1,0 à 1500 Pa·s, déterminée comme décrit dans la section Viscosité à l'état fondu de la description.

2. Procédé d'usinage selon la revendication 1, dans lequel
le matériau (2) pour aider un processus d'usinage de métal comprend en outre une couche adhésive sur une surface qui vient en contact avec un matériau métallique.

3. Procédé d'usinage selon l'une quelconque des revendications 1 à 2, dans lequel
le matériau (2) pour aider un processus d'usinage de métal comprend en outre une résine et/ou une charge.

4. Procédé d'usinage selon l'une quelconque des revendications 1 à 3, dans lequel
le matériau métallique (1) comprend au moins un élément sélectionné dans le groupe consistant en un alliage de titane, un alliage d'aluminium, un alliage de magnésium, un acier faiblement allié,
un acier inoxydable, et un alliage résistant à la chaleur.

5. Procédé d'usinage selon l'une quelconque des revendications 1 à 4, dans lequel
dans l'étape de traitement d'usinage, un trou est créé par un traitement de perçage en utilisant un foret en tant qu'outil d'usinage (3).

6. Procédé d'usinage selon la revendication 5 dans lequel
dans l'étape de traitement d'usinage, une vitesse d'usinage du foret est de 5 à 80 m/min, et une vitesse d'avance est de 0,01 à 1,0 mm/tr.
